# EUROPEAN PATENT APPLICATION

(11) **EP 4 625 617 A1**
(43) Date of publication of application: **01.10.2025**
(21) Application number: 25150600.2
(22) Date of filing: 08.01.2025
(51) Int. Cl.: H01M 10/613, H01M 10/625, H01M 10/6556, H01M 50/342, H01M 50/35

(54) **PRESSURE RELIEF LIQUID COOLING ASSEMBLY**

(30) Priority: 31.03.2024 CN 202410391379; 31.03.2024 CN 202420663427 U; 31.03.2024 CN 202420663405 U; 19.08.2024 WO PCT/CN2024/113030
(71) Applicant: Eve Energy Co., Ltd., Huizhou, Guangdong 516006 (CN)
(72) Inventor: HUANG, Jiaxin, Huizhou, Guangdong, 516006 (CN); HUANG, Guanping, Huizhou, Guangdong, 516006 (CN)
(74) Representative: Berggren Oy

(57) **Abstract**

A pressure relief liquid cooling assembly (100) includes a first liquid cooling member (110) and a second liquid cooling member (120) arranged opposite to each other. The first liquid cooling member (110) is provided with a first liquid cooling flow channel (111). The second liquid cooling member (120) is provided with a second liquid cooling flow channel (121). A gap is provided between the second liquid cooling member (120) and the first liquid cooling member (110) to form a first pressure relief channel (130). The first liquid cooling member (110) is provided with at least one first pressure relief hole (112) each penetrating through the first liquid cooling member (110) along a first direction (X) and communicated with the first pressure relief channel (130). The first pressure relief hole (112) is communicated with an explosion-proof valve of at least part of battery cells in a battery module (300).

## Description

### TECHNICAL FIELD

The present disclosure relates to a technical field of batteries, and in particular, to a pressure relief liquid cooling assembly.

### BACKGROUND

With the rapid development of battery technologies, safety designs of battery packs have been widely concerned. A battery pack includes a plurality of battery modules. Under a condition that battery cells in the battery modules occur thermal runaway, a large amount of high-temperature gas accompanied by flames may be instantly released inside the battery cells. In the related art, a first pressure relief channel and a liquid cooling flow channel may be provided in the battery pack to avoid safety accidents such as fires or explosions caused by the gas and the flames spreading around inside the battery pack.

However, in the related art, since designs of a first pressure relief channel and a liquid cooling flow channel are independent of each other, and the liquid cooling flow channel needs to be additionally provided on the basis of a pressure relief assembly, so that an overall space of a pressure relief liquid cooling assembly is relatively large, which is not conducive to space utilization of the battery pack when the pressure relief liquid cooling assembly is assembled into the battery pack.

### SUMMARY

A pressure relief liquid cooling assembly is provided by the present disclosure. The pressure relief liquid cooling assembly includes a first pressure relief member. The first pressure relief member includes a first liquid cooling member and a second liquid cooling member.

The first liquid cooling member is provided with a first liquid cooling flow channel.

The second liquid cooling member is arranged opposite to the first liquid cooling member along a first direction. The second liquid cooling member is provided with a second liquid cooling flow channel connected to the first liquid cooling member. A gap is provided between the second liquid cooling member and the first liquid cooling member to form a first pressure relief channel.

The first liquid cooling member is provided with at least one first pressure relief hole each penetrating through the first liquid cooling member along the first direction. The first pressure relief hole is communicated with the first pressure relief channel. The first pressure relief hole is configured to be communicated with an explosion-proof valve of at least part of battery cells in a battery module.

The beneficial effects of the present disclosure are illustrated below. In the pressure relief liquid cooling assembly provided by the present disclosure, the first pressure relief channel is formed by directly splicing the first liquid cooling member and the second liquid cooling member. The first liquid cooling member is directly provided with a pressure relief hole communicated with the explosion-proof valve of the battery cells of the battery module, so as to realize an integrated design of pressure relief and liquid cooling of the battery module without additionally designing the first pressure relief channel separately, thereby effectively reducing an overall space ratio of the pressure relief liquid cooling assembly.

### BRIEF DESCRIPTION OF THE DRAWINGS

FIG. 1 is a schematic three-dimensional structural diagram of a pressure relief liquid cooling assembly according to some embodiments of the present disclosure.
FIG. 2 is a schematic exploded structural diagram of the pressure relief liquid cooling assembly according to some embodiments of the present disclosure.
FIG. 3 is a schematic cross-sectional structural diagram of the pressure relief liquid cooling assembly according to some embodiments of the present disclosure.
FIG. 4 is a schematic comparative diagram of planar structures of a first liquid cooling plate and a second liquid cooling plate according to some embodiments of the present disclosure.
FIG. 5 is a schematic comparative diagram of planar structures of a first connecting plate and a second connecting plate according to some embodiments of the present disclosure.
FIG. 6 is a schematic three-dimensional structural diagram of a battery pack according to some embodiments of the present disclosure.
FIG. 7 is a schematic three-dimensional structural diagram of a pressure relief liquid cooling assembly according to other embodiments of the present disclosure.
FIG. 8 is a schematic three-dimensional structural diagram of a first pressure relief member according to some embodiments of the present disclosure.
FIG. 9 is a schematic three-dimensional structural diagram of a second pressure relief member according to some embodiments of the present disclosure.
FIG. 10 is a schematic cross-sectional structural diagram of the second pressure relief member according to some embodiments of the present disclosure.
FIG. 11 is a schematic three-dimensional structural diagram of a fixing member according to some embodiments of the present disclosure.
FIG. 12 is a schematic assembling structural diagram of the battery pack according to some embodiments of the present disclosure.

### Reference numerals:

10, battery pack;
100, pressure relief liquid cooling assembly; 11, first pressure relief member; 110, first liquid cooling member; 111, first liquid cooling flow channel; 112, first pressure relief hole; 113, first connecting plate; 114, first liquid cooling plate; 1111, support surface; 1131, mounting part; 1141, first protruding part; 1142, second reinforcing rib; 120, second liquid cooling member; 121, second liquid cooling flow channel; 122, second pressure relief hole; 123, second connecting plate; 124, second liquid cooling plate; 1241, second protruding part; 130, first pressure relief channel; 140, water inlet; 150, water outlet; 160, sealing member; 161, groove; X, first direction; Y, second direction;
12, second pressure relief member; 1201, second pressure relief channel; 1103, mounting groove; 1204, first reinforcing rib;
14, fixing member; 1401, snap part; 1402, connecting part;
200, accommodation space; 300, battery module; 400, pressure relief pipe; 500, liquid cooling pipe.

### DETAILED DESCRIPTION

In the present disclosure, it is stated that, unless specified or limited otherwise, the terms "mounted," "connected," "coupled," "fixed" and the like are interpreted broadly, and may be, for example, fixed connections, detachable connections, or integral connections; may also be mechanical or electrical connections; may also be direct connections or indirect connections via intervening structures; may also be inner communications of two elements, which can be understood in the present disclosure by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature. While a first feature "below," "under," or "on bottom of' a second feature may include an embodiment in which the first feature is right or obliquely "below", "under", or "on bottom of" the second feature, or just means that the first feature is at a height lower than that of the second feature.

In description of the embodiments, it should be understood that orientational or positional relationships represented by directional terms mentioned in the present disclosure, such as "up", "down", "left", "right", "front", "rear", etc., are orientational or positional relationships based on the drawings, and are merely for the convenience of describing the present disclosure and simplifying the description, rather than indicating or implying that the device or element is intended to have a particular orientation, or is constructed and operated in a particular orientation, and therefore, should not be interpreted as a limitation of the application. In addition, the terms "first" and "second" are used to distinguish in description and have no special meaning.

A pressure relief liquid cooling assembly and a battery pack are provided by the embodiments of the present disclosure, which will be described in detail below. It should be noted that the order of description of the following embodiments is not intended to limit the preferred order of the embodiments.

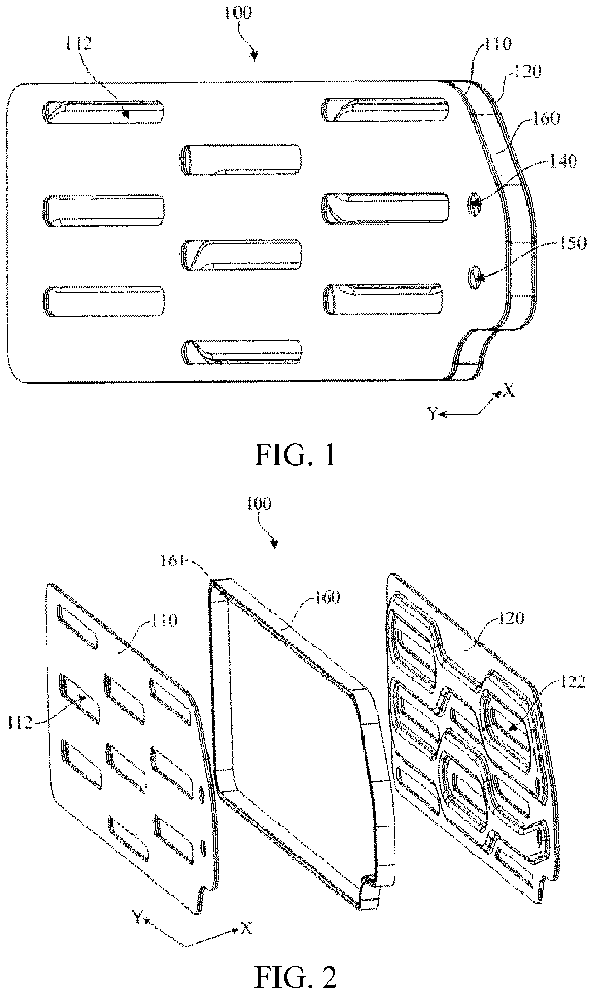

Referring to FIG. 1 to FIG. 3, a pressure relief liquid cooling assembly 100 is provided by the embodiments of the present disclosure. The pressure relief liquid cooling assembly 100 includes a first pressure relief member 11. The first pressure relief member 11 includes a first liquid cooling member 110 and a second liquid cooling member 120. The first liquid cooling member 110 is provided with a first liquid cooling flow channel 111. The second liquid cooling member 120 is arranged opposite to the first liquid cooling member 110 along a first direction X. The second liquid cooling member 120 is provided with a second liquid cooling flow channel 121. The second liquid cooling flow channel 121 is connected to the first liquid cooling member 110. A gap is provided between the second liquid cooling member 120 and the first liquid cooling member 110 to form a first pressure relief channel 130. That is, the first pressure relief channel 130, while serving as a cooling structure, is directly formed by splicing the first liquid cooling member 110 and the second liquid cooling member 120, thereby realizing an integrated design of pressure relief and liquid cooling.

The first liquid cooling member 110 is provided with at least one first pressure relief hole 112 each penetrating through the first liquid cooling member 110 along the first direction X. The first pressure relief hole 112 is communicated with the first pressure relief channel 130. The first pressure relief hole 112 is configured to be communicated with an explosion-proof valve of at least part of battery cells in a battery module 300. That is, the first liquid cooling member 110 serves as a side connected to the battery module 300 in the pressure relief liquid cooling assembly 100. By providing the pressure relief hole communicated with the first pressure relief channel 130 and the explosion-proof valve of at least part of the battery cells in the battery module 300, under a condition that the part of the battery cells in the battery module 300 occurs thermal runaway, high-temperature gas generated can enter the first pressure relief channel 130 through the pressure relief hole and be exhausted through the first pressure relief channel 130. In this situation, the gas inside the first pressure relief channel 130 may further be cooled by the first liquid cooling member 110 and the second liquid cooling member 120, thereby reducing the risk of safety accidents such as thermal runaway diffusion and explosion.

It should be noted that each of the first liquid cooling member 110 and the second liquid cooling member 120 is provided with a water inlet 140 and a water outlet 150. The water inlet 140 and the water outlet 150 are configured to be connected to a liquid cooling pipe 500, thereby realizing the circulation of the liquid cooling medium in the first liquid cooling flow channel 111 and the second liquid cooling flow channel 121.

In the pressure relief liquid cooling assembly provided by the embodiments of the present disclosure, the first pressure relief channel 130 is formed by directly splicing the first liquid cooling member 110 and the second liquid cooling member 120, and the first liquid cooling member 110 is directly provided with the pressure relief hole communicated with the explosion-proof valve of the battery cells of the battery module 300, so as to realize an integrated design of pressure relief and liquid cooling of the battery module 300 without additionally designing the first pressure relief channel 130 separately, thereby effectively reducing an overall space ratio of the pressure relief liquid cooling assembly 100. Under a condition that the pressure relief liquid cooling assembly 100 is applied to a battery pack 10, a space utilization rate of the battery pack 10 may be improved. In this situation, the first liquid cooling member 110 and the second liquid cooling member 120 are directly spliced, so that the formation of the first pressure relief channel 130 is simpler and convenient, and the investigation and maintenance of phenomena such as air leakage occurring during use of the pressure relief liquid cooling assembly 100 can be more convenient.

Optionally, the second liquid cooling member 120 is provided with at least one second pressure relief hole 122 each penetrating through the second liquid cooling member 120 along the first direction X. The second pressure relief hole 122 is communicated with the first pressure relief channel 130. The second pressure relief hole 122 is configured to be communicated with the explosion-proof valve of at least part of the battery cells in the battery module 300. That is, each of opposite two sides of the pressure relief liquid cooling assembly 100 along the first direction X may be connected to the battery module 300 and communicated with the explosion-proof valve of at least part of the battery cells corresponding to the battery module 300. That is, one pressure relief liquid cooling assembly 100 may serve as the first pressure relief channel 130 of two battery modules 300, thereby helping to further reduce the overall space ratio of the pressure relief liquid cooling assembly 100 and improving the space utilization rate of the corresponding battery pack 10.

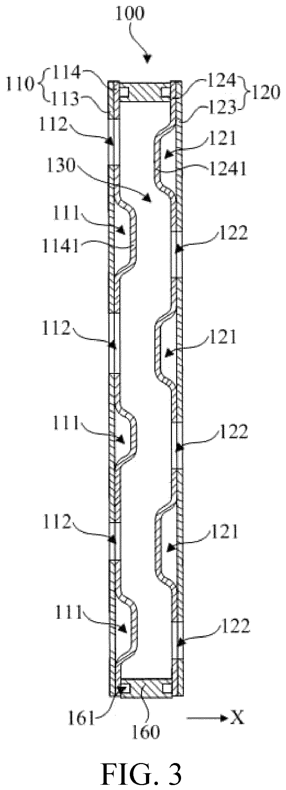

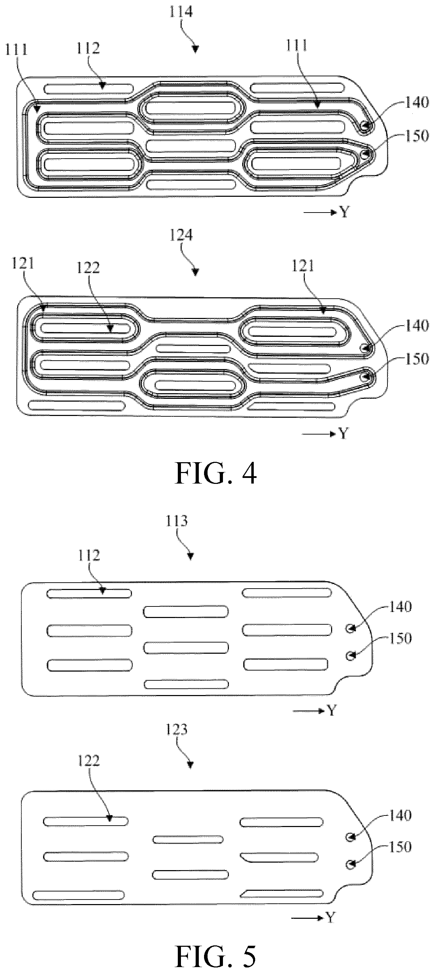

In some embodiments, referring to FIG. 3 to FIG. 5, the first liquid cooling member 110 is provided with a plurality of first pressure relief holes 112. The second liquid cooling member 120 is provided with a plurality of second pressure relief holes 122. The plurality of first pressure relief holes 112 are misaligned with the plurality of second pressure relief holes 122 along the first direction X. That is, along the first direction X, an orthographic projection of each of the first pressure relief holes 112 does not overlap an orthographic projection of each of the second pressure relief holes 122. That is, along the first direction X, each of the first pressure relief holes 112 can be regarded as being provided between adjacent two of the second pressure relief holes 112, and each of the second pressure relief holes 112 can be regarded as being provided between adjacent two of the first pressure relief holes 112, thereby achieving the misalignment of the first pressure relief holes 112 and the second pressure relief holes 122 along the first direction X. This is because the first pressure relief holes 112 are provided to be communicated with explosion-proof valves of at least part of the battery cells in one battery module 300, and the second pressure relief holes 122 are provided to be communicated with the explosion-proof valves of at least part of the battery cells in another battery module 300. Under a condition that the battery cells in one battery module 300 occur thermal runaway, the gas and debris ejected from the battery cells can enter the first pressure relief channel 130 through a corresponding one of the pressure relief holes. The pressure relief holes 112 are misaligned with the second pressure relief holes 122 along the first direction X, so as to prevent the gas and debris generated from affecting the battery cells in another battery module 300, thereby reducing the risk of the safety accidents such as thermal runaway diffusion and explosion.

It should be noted that when the pressure relief liquid cooling assembly 100 and the battery module 300 are assembled and connected, a mica sheet can be attached between the explosion-proof valve of each of the battery cells in the battery module 300 and a corresponding one of the first pressure relief holes 112 or the second pressure relief holes 122. Under the condition that the corresponding battery cell occurs thermally runaway, flames ejected from the battery cells can break through the mica sheet and enter the first pressure relief channel 130 through the corresponding one of the pressure relief holes. In addition, the mica sheet can play a certain buffer effect and block the debris ejected when the battery cells occur thermally runaway, thereby reducing the influence on the battery cells of the battery module 300 located on another side of the pressure relief liquid cooling assembly 100.

Each of the first pressure relief holes 112 and the second pressure relief holes 122 extends along a second direction Y The second direction Y and the first direction X are at an included angle. That is, each of the first pressure relief holes 112 and the second pressure relief holes 122 is in a strip shape. The plurality of first pressure relief holes 112 and the plurality of second pressure relief holes 122 may be arranged in a plurality of rows and columns, respectively. A distribution pattern of the first pressure relief holes 112 and the second pressure relief holes 122 is the same as a distribution pattern of a plurality of battery cells in the corresponding battery module 300, so that one pressure relief hole may be communicated with the explosion-proof valves of the plurality of battery cells in the battery module 300, thereby reducing a number of holes on the first liquid cooling member 110 and the second liquid cooling member 120 and facilitating a grouping design of the plurality of battery cells in the battery module 300.

In other embodiments, the pressure relief liquid cooling assembly 100 further includes a third liquid cooling member arranged between the first liquid cooling member 110 and the second liquid cooling member 120. The third liquid cooling member is provided with a third liquid cooling flow channel. One gap is provided between the third liquid cooling member and the first liquid cooling member 110 to form one first pressure relief channel 130, and another gap is provided between the third liquid cooling member and the second liquid cooling member 120 to form another first pressure relief channel 130. Under a condition that each of the first liquid cooling member 110 and the second liquid cooling member 120 of the the pressure relief liquid cooling assembly 100 is provided with the battery module 300, the third liquid cooling member may simultaneously cool the flames and gas ejected when the battery cells in two battery modules 300 occur thermally runaway, and may further act as a barrier to prevent the flames and the gas ejected when the battery cells in one of the battery modules 300 from affecting the other battery module 300, thereby further reducing the risk of the safety accidents such as thermal runaway diffusion and explosion.

Optionally, referring to FIG. 3, the first liquid cooling member 110 includes a first connecting plate 113 and a first liquid cooling plate 114 arranged opposite to each other along the first direction X. The first liquid cooling plate 114 protrudes along a direction away from the first connecting plate 113 to form at least one first protruding part 1141. The first protruding part 1141 and the first connecting plate 113 enclose to form the first liquid cooling flow channel 111. That is, the first liquid cooling member 110 is formed by splicing the first connecting plate 113 and the first liquid cooling plate 114. The first connecting plate 113 is a flat plate. The first liquid cooling plate 114 may be formed with the first protrusion part 1141 by stamping. By splicing the first connecting plate 113 and the first liquid cooling plate 114, the first liquid cooling flow channel 111 may be formed at a position corresponding to the first protrusion part 1141 inside the first liquid cooling member 110.

Correspondingly, the second liquid cooling member 120 includes a second connecting plate 123 and a second liquid cooling plate 124 arranged opposite to each other along the first direction X. The second liquid cooling plate 124 protrudes along a direction away from the second connecting plate 123 to form at least one second protruding part 1241. The second protruding part 1241 and the second connecting plate 123 enclose to form the second liquid cooling flow channel 121. That is, the second connecting plate 123 is a flat plate. The second liquid cooling plate 124 may be formed with the second protrusion part 1241 by stamping. By splicing the second connecting plate 123 and the second liquid cooling plate 124, the second liquid cooling flow channel 121 may be formed at a position corresponding to the second protrusion part 1241 inside the second liquid cooling member 120.

The first pressure relief channel 130 is formed between the second liquid cooling plate 124 and the first liquid cooling plate 114. That is, each of the first protruding part 1141 and the second protruding part 1241 protrudes toward the first pressure relief channel 130, so as to increase a contact area between the first liquid cooling member 110 and the pressure relief gas and a contact area between the second liquid cooling member 120 and the pressure relief gas, thereby improving a cooling effect of the pressure relief liquid cooling assembly 100. The first connecting plate 113 and the second connecting plate 123 serve as connecting sides with the battery module 300 and are flat plate structures, thereby helping to improve a connection stability between the battery module 300 and the pressure relief liquid cooling assembly 100.

It should be noted that one of the first liquid cooling plate 114 and the second liquid cooling plate 124 may be formed with the protrusion part. That is, the first liquid cooling plate 114 may be formed with the first protrusion part 1141 along the direction away from the first connecting plate 113, or the second liquid cooling plate 124 may be formed with the second protrusion part 1241 along the direction away from the second connecting plate 123. The other one of the two liquid cooling plates, which is not formed with the protruding part, still has the flat plate structure on a side facing the first pressure relief channel 130. Specific structures of the first liquid cooling plate 114 and the second liquid cooling plate 124 may be selected and adjusted according to actual design requirements, and are not particularly limited herein.

In some embodiments, the first protruding part 1141 is misaligned with the second protruding part 1241 along the first direction X. That is, along the first direction X, an orthographic projection of the first protrusion part 1141 does not overlap an orthographic projection of the second protrusion part 1241, so that the first protruding part 1141 and the second protruding part 1241 are at different region positions in the first pressure relief channel 130, thereby helping to improve the contact uniformity of the pressure relief gas with the pressure relief liquid cooling assembly 100 in the first pressure relief channel 130, and further helping to improve the cooling effect of the pressure relief liquid cooling assembly 100.

In other embodiments, a spacing is provided between the first protruding part 1141 and the second protruding part 1241 along the first direction X. That is, the first pressure relief channel 130 between the first liquid cooling plate 114 and the second liquid cooling plate 124 is designed as a whole surface. The first pressure relief channel 130 at a position corresponding to the first protruding part 1141 and the second protruding part 1241 is relatively narrow, and the first pressure relief channel 130 at a position corresponding to other areas is relatively wide, so that the pressure relief gas has a sufficient circulation space and a contact area between the first liquid cooling plate 114 and the second liquid cooling plate 124, thereby helping to improve the cooling effect of the pressure relief liquid cooling assembly 100.

In other embodiments, a side of the first protruding part 1141 facing the second liquid cooling plate 124 at least partially abuts against a side of the second protruding part 1241 facing the first liquid cooling plate 114. That is, under the condition that the first liquid cooling member 110 and the second liquid cooling member 120 are spliced together to form the first pressure relief channel 130, the first protruding part 1141 and the second protruding part 1241 are in contact with each other at least partially, so that the pressure relief gas may be automatically diverted when passing through the abutment of the first protruding part 1141 and the second protruding part 1241. This arrangement enables the gas and the flames generated by thermal runaway of the battery cells in the battery module 300 to flow directionally between the first liquid cooling member 110 and the second liquid cooling member 120, thereby helping to alleviate the gas and the flames from spreading around in the first pressure relief channel 130 and realizing directional pressure relief of the battery module 300 by the pressure relief liquid cooling assembly 100.

Under a condition that the first protruding part 1141 and the second protruding part 1241 are continuously abutted along an extending direction, the first pressure relief channel 130 can be divided into a plurality of sub-channels according to specific shapes of the first protruding part 1141 and the second protruding part 1241, so as to further alleviate the gas and the flames from spreading around in the first pressure relief channel 130, thereby realizing the directional pressure relief of the pressure relief liquid cooling assembly 100 for the battery module 300.

It should be noted that a positional relationship between the first protrusion part 1141 and the second protrusion part 1241 may be selected and adjusted according to the actual design requirements. The circulation of the first pressure relief channel 130 between the first liquid cooling member 110 and the second liquid cooling member 120 may be ensured to achieve stable pressure relief of the pressure relief liquid cooling assembly 100. The present disclosure does not particularly limit the positional relationship between the first protruding part 1141 and the second protruding part 1241.

In some embodiments, referring to FIG. 3 to FIG. 5, the first liquid cooling flow channel 111 surrounds the first pressure relief holes 112. That is, the first liquid cooling flow channel 111 in the first liquid cooling 110 is designed to be able to be wound back along the second direction Y as a whole. If the first liquid cooling flow channel 111 is regarded as a plurality of first sub-flow channels extending along the second direction Y and communicated with each other, each of the first pressure relief holes 112 can be correspondingly provided between adjacent two of the sub-flow channels, thereby improving the cooling effect of the first liquid cooling member 110 on the pressure relief gas.

A part of the first sub-flow channels can be connected end-to-end. That is, the part of the first sub-flow channels can be enclosed to form an annular flow channel. The annular flow channel may be correspondingly provided with the pressure relief holes to increase the contact area between the pressure relief gas and the first liquid cooling member 110 after the pressure relief gas enters the first pressure relief channel 130 through the pressure relief holes, thereby further improving the cooling effect of the first liquid cooling member 110 on the pressure relief gas.

Correspondingly, in other embodiments, the second liquid cooling flow channel 121 surrounds the second pressure relief holes 122. That is, the second liquid cooling flow channel 121 in the second liquid cooling member 120 is designed to be able to be wound back along the second direction Y as a whole. If the second liquid cooling flow channel 121 is regarded as a plurality of second sub-flow channels extending along the second direction Y and communicated with each other, each of the second pressure relief holes 122 may be correspondingly provided between adjacent two of the sub-flow channels, thereby further improving the cooling effect of the second liquid cooling member 120 on the pressure relief gas.

A part of the second sub-flow channels may be connected end-to-end. That is, the part of the second sub-flow channels may enclose to form an annular flow channel. The annular flow channel may be correspondingly provided with the pressure relief holes to increase the contact area between the pressure relief gas and the second liquid cooling member 120 after the pressure relief gas enters the first pressure relief channel 130 through the pressure relief holes, thereby further improving the cooling effect of the second liquid cooling member 120 on the pressure relief gas.

It should be noted that under a condition that both the first liquid cooling flow channel 111 and the second liquid cooling flow channel 121 are formed with the annular flow channels at corresponding positions, the first protrusion part 1141 and the second protrusion part 1241 are not fully contacted with each other at the positions. Otherwise, a closed first pressure relief channel 130 may be formed at the positions corresponding to the pressure relief holes, and the pressure relief gas entering the first pressure relief channel 130 through the pressure relief holes cannot be exhausted through the pressure relief liquid cooling assembly 100, resulting in the safety accidents such as thermal runaway diffusion or explosion.

Optionally, referring to FIG. 2 and FIG. 3, the pressure relief liquid cooling assembly 100 further includes a sealing member 160 connected between the first liquid cooling member 110 and the second liquid cooling member 120. Along the first direction X, at least one surface of opposite two sides of the sealing member 160 is provided with a groove 161, and the groove is filled with a sealant inside. That is, the first liquid cooling member 110 and the second liquid cooling member 120 are sealed by the sealing member 160. The sealing member 160 has an annular shape. The sealing member 160, together with the first liquid cooling member 110 and the second liquid cooling member 120, enclose a side wall of the first pressure relief channel 130. By providing the groove filled with the sealant inside on the surface of the sealing member 160, a connecting effect and a sealing effect between the sealing member 160 and the first liquid cooling member 110 and the second liquid cooling member 120 are improved, thereby preventing phenomena such as air leakage during use of the pressure relief liquid cooling assembly 100.

It should be noted that after the sealing member 160 is connected to the first liquid cooling member 110 and the second liquid cooling member 120, a layer of sealant can be bonded to an outer surface of corresponding connection positions between the sealing member 160 and the first liquid cooling member 110 and the second liquid cooling member 120, thereby further strengthening the sealing effect of the pressure relief liquid cooling assembly 100 and reducing the risk of air leakage.

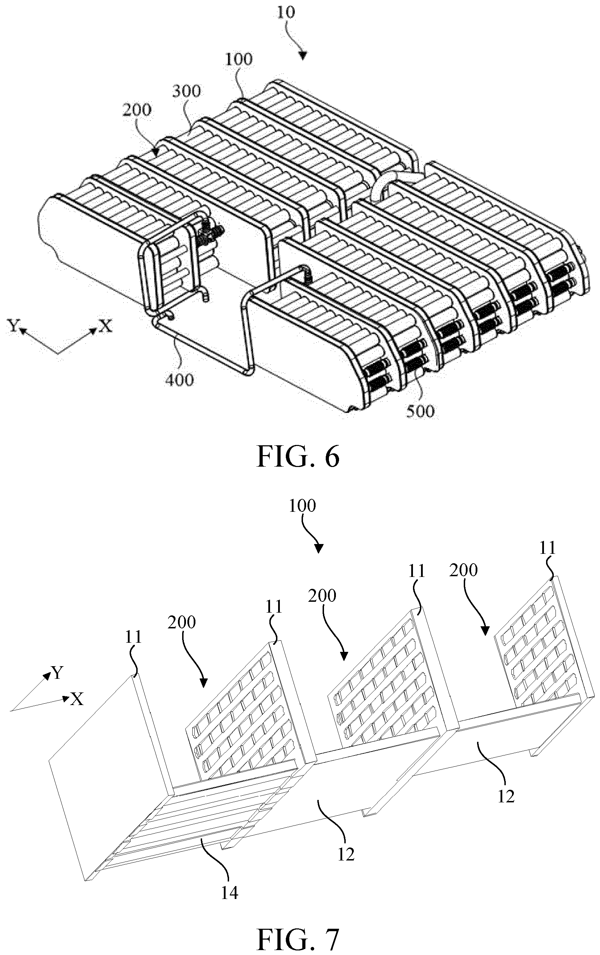

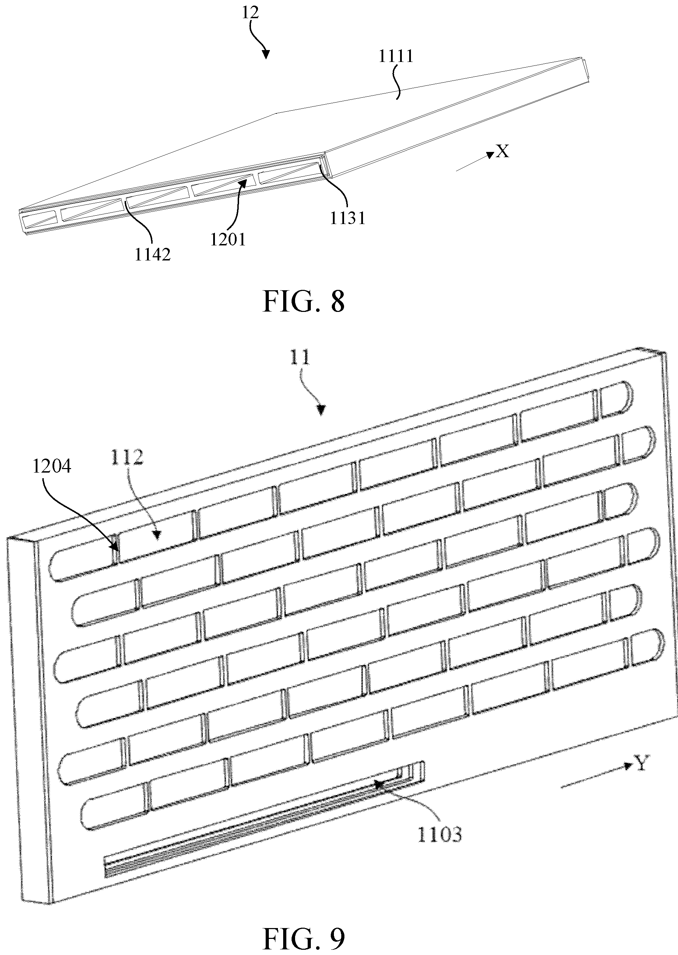

In some embodiments, referring to FIG. 7 and FIG. 8, the pressure relief liquid cooling assembly 100 further includes a second pressure relief member 12 detachably connected to the first pressure relief member 11. The second pressure relief member 12 includes a support surface 1111 configured to support the battery module 300. The first pressure relief member 11 protrudes from the support surface 1111 to form an accommodation space 200 configured to mount the battery module 300. That is, the second pressure relief member 12 and the first pressure relief member 11 are detachably assembled to form the accommodation space 200 configured to mount the battery module 300, and the second pressure relief member 12 may serve as a support structure to support the battery module 300.

Referring to FIG. 8 to FIG. 10, the second pressure relief member 12 is provided with a second pressure relief channel 1201. The first pressure relief member 11 is provided with the first pressure relief channel 130. The first pressure relief channel 130 is communicated with the second pressure relief channel 1201. A side of one of the second pressure relief member 12 and the first pressure relief member 11 facing the accommodation space 200 is provided with the first pressure relief hole 112. The first pressure relief hole 112 is configured to be communicated with the explosion-proof valve of the battery cell in the battery module 300. The pressure relief hole 1202 is communicated with the second pressure relief channel 1201 or the first pressure relief channel 130. Under the condition that the battery module 300 is thermal runaway, the high-temperature gas generated may enter the second pressure relief channel 1201 and the first pressure relief channel 130 from the pressure relief hole 1202 through the explosion-proof valve of the battery cell and be exhausted in time, thereby preventing the safety accidents such as explosion due to thermal runaway of the battery module 300.

In some embodiments, the first pressure relief holes 112 may be provided on a side of the first pressure relief member 11 facing the accommodation space 200. In other embodiments, the first pressure relief holes 112 may be provided on a side of the second pressure relief member 12 facing the accommodation space 200.

It should be noted that under a condition that the first pressure relief holes 112 are provided on the first pressure relief member 11, the second pressure relief member 12 is provided with a pressure relief valve (not shown in the figures). Under a condition that the first pressure relief holes 112 are provided on the second pressure relief member 12, the first pressure relief member 11 is provided with the pressure relief valve. The pressure relief valve serves as a final exhaust port of the gas in the pressure relief liquid cooling assembly 100 to exhaust the high-temperature gas generated from the pressure relief liquid cooling assembly 100 when the battery module 300 occurs thermally runaway.

Each of the first pressure relief holes 112 extends along the second direction Y Each of the first pressure relief holes 112 may be simultaneously communicated with the explosion-proof valves of the plurality of battery cells in the battery module 300. That is, the first pressure relief holes 112 may be distributed in the plurality of rows and columns, and the distribution pattern of the first pressure relief holes 112 is the same as the distribution pattern of the plurality of battery cells in the battery module 300.

Correspondingly, under the condition that the first pressure relief holes 112 are provided on the first pressure relief member 11, the first pressure relief channel 130 in the first pressure relief member 11 may be provided with a plurality of first reinforcing ribs 1204 each extending along the second direction Y Each of the first reinforcing ribs 1204 is located between adjacent two of the rows of the first pressure relief holes 112 to divide the first pressure relief channel 130 into the plurality of sub-channels, thereby forming a directional pressure relief channel corresponding to each of the rows of the battery cells in the battery module 300. In this situation, a structural strength of the first pressure relief member 11 may be increased by providing the first reinforcing ribs 1204 to ensure a structural stability of the pressure relief liquid cooling assembly 100. The plurality of sub-channels are communicated with each other on one side along the second direction Y, thereby realizing communication between the plurality of sub-channels and the second pressure relief channel 1201 in the second pressure relief member 12.

In the embodiments of the present disclosure, the accommodation space 200 configured to mount the battery module 300 is formed by the second pressure relief member 12 and the first pressure relief member 11, and the second pressure relief member 12 and the first pressure relief member 11 are provided with the pressure relief channels, so that the high-temperature gas generated by the thermal runaway of the battery module 300 may be exhausted directionally along the pressure relief channels. The second pressure relief member 12 and the first pressure relief member 11 are detachably connected, so that the second pressure relief member 12 or the first pressure relief member 11 may be disassembled, repaired, or replaced when a failure such as blockage occurs. Compared with an integrated method such as welding, the mounting method of the pressure relief liquid cooling assembly 100 in the embodiments is simpler and more convenient. In addition, the second pressure relief member 12 in the embodiments may further serve as a support structure to support the battery module 300, thereby ensuring the mounting stability of the battery module 300.

Optionally, referring to FIG. 7, the pressure relief liquid cooling assembly 100 includes a plurality of first pressure relief members 11 arranged at intervals along the first direction X. Each of the plurality of first pressure relief members 11 is connected to the second pressure relief member 12. The second pressure relief member 12 and any adjacent two of the first pressure relief members 11 enclose to define the accommodation space 200. That is, the pressure relief liquid cooling assembly 100 is formed with a plurality of accommodation spaces 200. Each of the accommodation spaces 200 may be arranged to mount one or two battery modules 300. The explosion-proof valves of the battery cells in each battery module 300 are communicated with the first pressure relief holes 112 on the adjacent first pressure relief member 11 and communicated with the first pressure relief channel 130 in a corresponding first pressure relief member 11. The first pressure relief channel 130 in the corresponding first pressure relief member 11 is communicated with the first pressure relief channel 1201 in the second pressure relief member 12.

In some embodiments, the second pressure relief member 12 is provided with one second pressure relief channel 1201. The first pressure relief channel 130 in each of the plurality of first pressure relief members 11 is communicated with the second pressure relief channel 1201. That is, the pressure relief liquid cooling assembly 100 includes one second pressure relief member 12 and the plurality of first pressure relief members 11. The plurality of first pressure relief members 11 are simultaneously connected to the second pressure relief member 12. The second pressure relief member 12 is provided with one second pressure relief channel 1201 inside. The first pressure relief channels 130 in the plurality of first pressure relief members 11 are simultaneously communicated with the second pressure relief channel 1201 to form the directional pressure relief channels, respectively.

In other embodiments, the second pressure relief member 12 is provided with a plurality of second pressure relief channels 1201 arranged at intervals along the first direction X. Each of the plurality of second pressure relief channels 1201 is provided corresponding to a respective one of the plurality of accommodation spaces 200. The first pressure relief channel 130 in each of the first pressure relief members 11 is communicated with a corresponding one of the second pressure relief channels 1201 corresponding to at least one of the accommodation spaces 200 adjacent to the first pressure relief channel 130. That is, although the pressure relief liquid cooling assembly 100 includes one second pressure relief member 12, the second pressure relief member 12 is provided with the plurality of second pressure relief channels 1201 arranged at intervals, and the second pressure relief channels 1201 are located at a bottom of one of the accommodation spaces 200, respectively. Under the condition that the battery module 300 occurs thermal runaway, the high-temperature gas generated flows to the corresponding one of the second pressure relief channels 1201 corresponding to the adjacent accommodation space 200 through the first pressure relief channel 130 in the corresponding first pressure relief member 11 and is exhausted, thereby reducing the influence on the battery module 300 mounted in other accommodation spaces 200.

It should be noted that under a condition that the pressure relief liquid cooling assembly 100 includes one second pressure relief member 12 and the plurality of first pressure relief members 11, the plurality of first pressure relief members 11 may be directly inserted into the support surface 1111 of the second pressure relief member 12 in sequence along the first direction X. In some embodiments, the second pressure relief member 12 is provided with one second pressure relief channel 1201, and one pressure relief valve may be correspondingly provided on the second pressure relief member 12 as the final exhaust port. In other embodiments, under a condition that the second pressure relief member 12 is provided with the plurality of second pressure relief channels 1201 arranged at intervals along the first direction X, one pressure relief valve may be provided as the final discharge port of each pressure relief channel at a position corresponding to each of the second pressure relief channels 1201 on the second pressure relief member 12. The specific arrangement method may be selected and adjusted according to the actual design requirements, as long as the high-temperature gas generated may be smoothly exhausted.

Each of the second pressure relief channels 1201 of the second pressure relief member 12 may be provided with a plurality of second reinforcing ribs 1142 each extending along the first direction X. The plurality of second reinforcing ribs 1142 are arranged at intervals along the second direction Y to divide the second pressure relief channel 1201 into a plurality of pressure relief sub-channels extending along the first direction X and arranged in parallel along the second direction Y, thereby realizing directional exhaust of the gas. In this situation, a structural strength of the second pressure relief member 12 may further be effectively increased by providing the second reinforcing ribs 1142 to ensure the structural stability of the pressure relief liquid cooling assembly 100.

Optionally, the pressure relief liquid cooling assembly 100 includes a plurality of second pressure relief members 12. Each of the second pressure relief members 12 is connected between the any adjacent two of the first pressure relief members 11. The any adjacent two of the first pressure relief members 11 and the corresponding one of the second pressure relief members 12 enclose to form the accommodation space 200. The first pressure relief channel 130 in each of the first pressure relief members 11 is communicated with the corresponding one of the second pressure relief channels 1201 in at least one of the second pressure relief members 12 adjacent to the first pressure relief channel 130. That is, each of the second pressure relief members 12 is detachably connected to the adj acent two of the first pressure relief members 11 to enclose and form the accommodation space 200. The second pressure relief channel 1201 in each of the second pressure relief members 12 may be communicated with the first pressure relief channel 130 in one or two of the first pressure relief members 11 to form the directional pressure relief channels. In the embodiments, by providing the plurality of second pressure relief members 12, compared to providing one second pressure relief member 12, when the failure such as blockage occurs in a certain section of the second pressure relief channel 1201, only a corresponding one of the second pressure relief members 12 may be repaired or replaced without replacing the entire second pressure relief members 12, thereby helping to reduce cost loss.

The second pressure relief channels 1201 in the plurality of the second pressure relief members 12 are communicated with each other. As long as one of the plurality of second pressure relief elements 12 is provided with the pressure relief valve as the final exhaust port, no matter the battery module 300 in which accommodation space 200 occurs thermal runaway, the high-temperature gas generated may be exhausted along the first pressure relief channel 130 in the corresponding first pressure relief members 11 to the second pressure relief channels 1201 in the plurality of second pressure relief members 12, thereby helping to simplify an overall design of the pressure relief channel.

It should be noted that the second pressure relief channels 1201 in the plurality of second pressure relief members 12 may also be isolated from each other, as long as the second pressure relief channel 1201 in each of the second pressure relief members 12 is communicated with the first pressure relief channel 130 in the corresponding first pressure relief member 11. In this situation, each of the second pressure relief members 12 may be provided with one pressure relief valve as the final exhaust port, so that the high-temperature gas generated during thermal runaway of each battery module 300 can be exhausted from the final exhaust port of the corresponding second pressure relief member 12 in a directional manner, thereby reducing the influence on the battery module 300 mounted in other accommodation spaces 200.

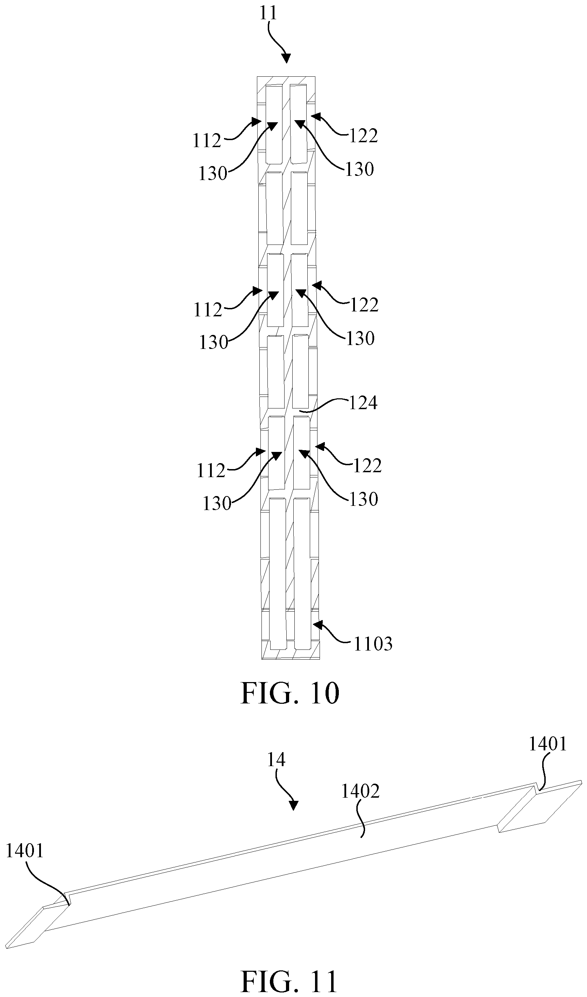

In some embodiments, referring to FIG. 7 and FIG. 10, each of the first pressure relief members 11 located between adjacent two accommodation spaces 200 is provided with two first pressure relief channels 130. The two first pressure relief channels 130 are arranged side by side along the first direction X. Along the first direction X, the first pressure relief hole 112 and the second pressure relief hole 122 are distributed on the opposite two sides of the first pressure relief member 11, respectively. The first pressure relief hole 112 and the second pressure relief hole 122 are respectively communicated with a corresponding one of the two first pressure relief channels 130. That is, two battery modules 300 are mounted in one accommodation space 200. The opposite two sides of the first pressure relief member 11 located between adjacent two of the accommodation spaces 200 correspond to one battery module 300 in the two accommodation spaces 200, respectively. That is, the pressure relief channels of the two battery modules 300 are provided in one first pressure relief member 11.

In some embodiments, the two first pressure relief channels 130 in each of the first pressure relief members 11 are communicated with each other, so that the two first pressure relief channels 130 may be simultaneously communicated with the second pressure relief channels 1201 in the second pressure relief member 12 corresponding to the two accommodation spaces 200 adjacent to the first pressure relief member 11. When the second pressure relief channel 1201 in the second pressure relief member 12 corresponding to one of the accommodation spaces 200 occurs a failure such as blocking, the high-temperature gas generated when the battery module 300 located in the accommodation space 200 may still be exhausted through the second pressure relief channel 1201 in the second pressure relief member 12 corresponding to the accommodation space 200 adjacent to the battery module 300, thereby reducing the risk of the safety accidents such as explosion caused by blocking of the pressure relief channel.

It should be noted that although the two first pressure relief channels 130 in each of the first pressure relief members 11 are communicated with each other, an isolation plate is disposed between the two pressure relief channels, and the two pressure relief channels are communicated with each other on sides of the two pressure relief channels adjacent to the second pressure relief member 12, so that the two first pressure relief channels 130 may be simultaneously communicated with the second pressure relief channels 1201 in the second pressure relief member 12 corresponding to the two accommodating spaces 200 adjacent to the first pressure relief member 11. The arrangement of the isolation plate may prevent the high-temperature gas generated after the battery module 300 located on one side of the first pressure relief member 11 occurs thermal runaway from affecting the battery module 300 on the other side, thereby reducing mutual influence among the plurality of battery modules 300.

In other embodiments, the two first pressure relief channels 130 in each of the first pressure relief members 11 are isolated from each other and communicated with the corresponding one of the second pressure relief channels 1201 in the second pressure relief members 12, respectively. The corresponding one of the second pressure relief channels (1201) corresponds to the accommodation space 200 adjacent to each of the two first pressure relief channels 130. That is, the two first pressure relief channels 130 in the first pressure relief member 11 are independent of each other. Under a condition that the battery module 300 in one accommodation space 200 occurs thermal runaway, the high-temperature gas generated only enters one of the first pressure relief channels 130 through the corresponding pressure relief hole, and then flows to the second pressure relief channel 1201 in the second pressure relief member 12 corresponding to the accommodation space 200, and does not flow to the pressure relief channels corresponding to other battery modules 300, thereby effectively reducing the mutual influence between the battery modules 300.

It should be noted that the second pressure relief channels 1201 in the plurality of second pressure relief members 12 are also independent of each other, and the pressure relief valve is separately provided on each of the second pressure relief members 12 as the final exhaust port, so that the high-temperature gas generated when each battery module 300 occurs thermal runaway may be exhausted directionally along the corresponding pressure relief channel.

Optionally, referring to FIG. 8 and FIG. 9, one of a side of the second pressure relief member 12 facing the first pressure relief member 11 and a side of the first pressure relief member 11 facing the second pressure relief member 12 is provided with a mounting groove 1103, and the other one protrudes to form a mounting part corresponding to the mounting groove 1103. The mounting part is configured to be inserted into the mounting groove 1103 to make that the second pressure relief channel 1201 is communicated with the first pressure relief channel 130. That is, the second pressure relief member 12 and the first pressure relief member 11 are detachably connected by mutual cooperation of the mounting groove 1103 and the mounting part 1131, so as to facilitate quick positioning and assembly of the second pressure relief member 12 and the first pressure relief member 11.

Under a condition that the first pressure relief member 11 is provided with the mounting groove 1103 and the second pressure relief member 12 is convex with the mounting part 1131, the mounting groove 1103 may be located on a surface of the first pressure relief member 11 facing the accommodation space 200. The mounting groove 1103 is communicated with the first pressure relief channel 130 in the first pressure relief member 11. The mounting part 1131 is a hollow structure and is communicated with the second pressure relief channel 1201 in the second pressure relief member 12, thereby realizing the communication between the second pressure relief channel 1201 and the first pressure relief channel 130. Correspondingly, under a condition that the second pressure relief member 12 is provided with the mounting groove 1103 and the first pressure relief member 11 is convex with the mounting part 1131, the mounting groove 1103 may be located on the support surface 1111 of the second pressure relief member 12. The mounting groove 1103 is communicated with the second pressure relief channel 1201 in the second pressure relief member 12. The mounting part 1131 is a hollow structure and is communicated with the first pressure relief channel 130 in the first pressure relief member 11, thereby realizing the communication between the second pressure relief channel 1201 and the first pressure relief channel 130.

It should be noted that arrangement positions of the mounting groove 1103 and the mounting part 1131 may be selected and adjusted according to the actual design requirements, and are not particularly limited herein.

Referring to FIG. 7 and FIG. 11, the pressure relief liquid cooling assembly 100 further includes a fixing member 14. The fixing member 14 includes two snap parts 1401 and a connecting part 1402 connected between the two snap parts 1401. Each of the two snap parts 1401 is snapped with one side of a corresponding one of the adjacent two of the first pressure relief members 11 to connect the adjacent two one of the first pressure relief members 11. That is, the fixing member 14 has a chapter-like structure. The fixing member 14 is clamped with the adjacent two of the first pressure relief member 11 to realize stable installation between the adjacent two of the first pressure relief members 11 and the corresponding second pressure relief member 12.

The first pressure relief member 11 may protrude from a side of the second pressure relief member 12 facing away from the support surface 1111. The fixing member 14 is provided on a side of the protruding part of the first pressure relief member 11 facing away from the second pressure relief member 12. That is, the fixing member 14 is located at the bottom of the battery module 300 to reduce the space ratio of the fixing member 14. In addition, the fixing member 14 may further be provided on a top or a side edge of the battery module 300 to improve the assembly stability of the first pressure relief member 11 and the second pressure relief member 12. A specific arrangement position of the fixing member may be selected and adjusted according to the actual design requirements, and is not particularly limited herein.

A battery pack is further provided by the embodiments of the present disclosure. The battery pack includes the pressure relief liquid cooling assembly. A specific structure of the pressure relief liquid cooling assembly refers to the above-mentioned embodiments. Since the battery pack adopts all the technical solutions of all the above-mentioned embodiments, the battery pack has at least all the beneficial effects brought by the technical solutions of the above-mentioned embodiments, and will not be repeatedly described herein.

Referring to FIG. 6, the battery pack 10 includes the pressure relief liquid cooling assembly 100 and at least one battery module 300. The battery module 300 is connected to the pressure relief liquid cooling assembly 100. The explosion-proof valve of the battery cells in the battery module 300 is communicated with the first pressure relief hole 112 or the second pressure relief hole 122 of the pressure relief liquid cooling assembly 100. The battery module 300 may be directly bonded to the pressure relief liquid cooling assembly 100 as a whole, so as to facilitate rapid assembly of the battery pack 10. When the battery module 300 is bonded to the first liquid cooling member 110 in the pressure relief liquid cooling assembly 100, the explosion-proof valve of at least part of the battery cells in the battery module 300 is communicated with the first pressure relief hole 112 on the first liquid cooling member 110. When the battery module 300 is bonded to the second liquid cooling member 120 in the pressure relief liquid cooling assembly 100, the explosion-proof valve of at least part of the battery cells in the battery module 300 is communicated with the second pressure relief hole 122 on the second liquid cooling member 120. When the battery cells in the battery module 300 occur thermal runaway, the gas and the flames ejected from the battery cells enter the first pressure relief channel 130 through the corresponding pressure relief hole and are exhausted. In this situation, the first liquid cooling member 110 and the second liquid cooling member 120 may cool the ejected gas and flames to reduce the risk of the safety accidents such as thermal runaway diffusion and explosion.

Specifically, referring to FIG. 1 to FIG. 3, in the embodiments of the present disclosure, the first pressure relief channel 130 is formed by directly splicing the first liquid cooling member 110 and the second liquid cooling member 120, and the first liquid cooling member 110 is directly provided with the pressure relief hole communicated with the explosion-proof valve of the battery cells of the battery module 300, so as to realize the integrated design of pressure relief and liquid cooling of the battery module 300 without additionally designing the first pressure relief channel 110 separately, thereby effectively reducing the overall space ratio of the pressure relief liquid cooling assembly 100. When the pressure relief liquid cooling assembly 100 is applied to the battery pack 10, the space utilization ratio of the battery pack 10 may be improved. In addition, the method of directly splicing the first liquid cooling member 110 and the second liquid cooling member 120 further makes the formation of the first pressure relief channel 130 simpler and more convenient, and further facilitates the investigation and maintenance of phenomena such as air leakage occurring during use of the pressure relief liquid cooling assembly 100.

In some embodiments, referring to FIG. 6, the battery pack 10 includes a plurality of pressure relief liquid cooling assemblies 100 arranged at intervals along the first direction X. The accommodation space 200 is formed between any adjacent two of the pressure relief liquid cooling assemblies 100. The accommodation space 200 is arranged to mount the battery module 300. That is, the pressure relief liquid cooling assemblies 100 are respectively arranged on two sides of each battery modules 300. That is, each of the two sides of each battery module 300 is provided with the pressure relief liquid cooling assembly 100. On one hand, the pressure relief liquid cooling assemblies 100 on the two sides are simultaneously bonded to the battery module 300, thereby improving the installation stability of the battery module 300 and improving the overall structural stability of the battery pack 10. On the other hand, the pressure relief liquid cooling assemblies 100 are simultaneously arranged on the two sides of the battery module 300, different battery cells in the battery module 300 may select different first pressure relief channels 130, thereby further contributing to the arrangement design of the plurality of battery cells in the battery module 300 to meet different usage requirements.

Each of the battery cells includes a positive electrode and a negative electrode. The explosion-proof valve is provided at one end of the positive electrode or the negative electrode. When the plurality of battery cells are assembled into the battery module 300, the positive electrode and the negative electrode in the plurality of battery cells may have different orientations according to series-parallel connection requirements. For example, when the pressure relief liquid cooling assemblies 100 are arranged on the two sides of the battery module 300, the battery cells with the positive electrode facing one side are communicated with the pressure relief hole on the corresponding one pressure relief liquid cooling assembly 100, and the battery cells with the positive electrode facing the other side is communicated with the pressure relief hole on the corresponding another pressure relief liquid cooling assembly 100. That is, the plurality of battery cells in one battery module 300 may be relieved by two different first pressure relief channels 130, thereby realizing the directional pressure relief of the battery module 300 while satisfying the arrangement design of the plurality of battery cells in the battery module 300.

The battery pack 10 further includes a pressure relief pipe 400 communicated with the first pressure relief channels 130 in the plurality of pressure relief liquid cooling assemblies 100. That is, each of the pressure relief liquid cooling assemblies 100 is provided with an exhaust hole. The pressure relief pipe 400 is communicated with a corresponding one of the first pressure relief channels 130 through the exhaust hole in each of the pressure relief liquid cooling assemblies 100, so that the gas and the flames generated by thermal runaway flow into the pressure relief pipe 400 through the first pressure relief channels 130 in the pressure relief liquid cooling assemblies 100, and then are exhausted through the pressure relief pipe 400, thereby realizing directional pressure relief.

It should be noted that an opening position of the exhaust hole on the pressure relief liquid cooling assembly 100 needs to avoid the liquid cooling flow channel in the first liquid cooling member 110 and the second liquid cooling member 120, so as to prevent the liquid cooling medium from interfering with a pressure relief process and further prevent the pressure relief gas from affecting the cooling process of the first liquid cooling member 110 and the second liquid cooling member 120.

Correspondingly, the battery pack 10 further includes a liquid cooling pipe 500. Each of the first liquid cooling member 110 and the second liquid cooling member 120 is provided with the water inlet 140 and the water outlet 150. The liquid cooling pipe 500 is communicated with the first liquid cooling flow channel 111 and the second liquid cooling flow channel 121 through the water inlet 140 and the water outlet 150. The liquid cooling pipe 500 is arranged to introduce and exhaust the liquid cooling medium to realize the circulation of the liquid cooling medium in the first liquid cooling flow channel 111 and the second liquid cooling flow channel 121.

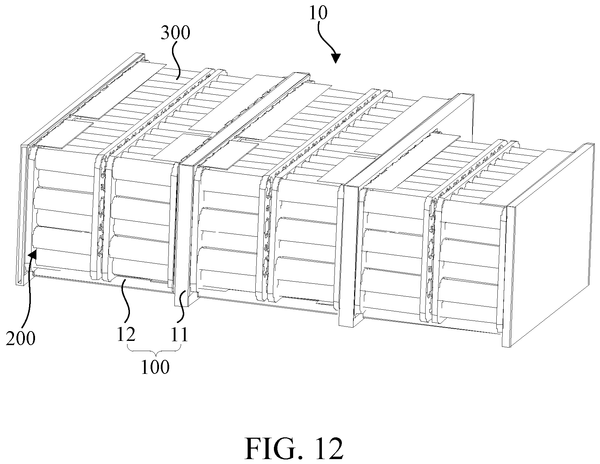

In some embodiments, referring to FIG. 12, the battery pack 10 includes the pressure relief liquid cooling assembly 100 and the battery module 300. The battery module 300 is disposed in the accommodation space 200 of the pressure relief liquid cooling assembly 10. The explosion-proof valve of the battery cell in the battery module 300 is communicated with the pressure relief hole 1202 in the pressure relief liquid cooling assembly 100. When the battery module 300 is thermal runaway, the generated high-temperature gas reaches the pressure relief hole 1202 through the explosion-proof valve of the battery cell, and is then exhausted through the first pressure relief channel 130 in the first pressure relief element 11 and the second pressure relief channel 1201 in the second pressure relief element 12 in the pressure relief liquid cooling assembly 100, thereby avoiding the safety accidents such as thermal runaway diffusion and explosion.

Two battery modules 300 are mounted in one accommodation space 200. The explosion-proof valves of the battery cells in the two battery modules 300 are arranged away from each other. That is, the explosion-proof valves of the battery cells in the two battery modules 300 face the first pressure relief pieces 11 on both sides of the accommodation space 200, respectively. The pressure relief channels of the two adjacent battery modules 300 are arranged in the first pressure relief member 11 located between the adjacent two of the accommodation spaces 200, so as to reduce the number of the first pressure relief pieces 11 under the same number of modules, thereby reducing the space ratio of the pressure relief liquid cooling assembly 100 and improve the space utilization rate of the battery pack 10.

Specifically, referring to FIG. 7 to FIG. 10, in the embodiments of the present disclosure, the accommodation space 200 provided for mounting the battery module 300 is formed by the second pressure relief member 12 and the first pressure relief member 11. The pressure relief channel is provided in each of the second pressure relief member 12 and the first pressure relief member 11, so that the high-temperature gas generated by thermal runaway of the battery module 300 may be exhausted directionally along the pressure relief channel. By adopting the detachable connection method, it is convenient to disassemble, overhaul or replace the second pressure relief member 12 or the first pressure relief member 11 when the failure such as blockage occurs. Compared with the integrated method such as welding, the mounting method of the pressure relief liquid cooling assembly 100 in the embodiments is simpler and more convenient, and the assembly of the battery pack 10 is also convenient. In addition, the second pressure relief member 12 in the embodiments may further serve as a support structure of the battery module 300 to support the battery module 300, thereby ensuring the mounting stability of the battery module 300.

## Claims

1. A pressure relief liquid cooling assembly (100), **characterized in that** the pressure relief liquid cooling assembly (100) comprises a first pressure relief member (11), and the first pressure relief member (11) comprises:
a first liquid cooling member (110) provided with a first liquid cooling flow channel (111); and
a second liquid cooling member (120) arranged opposite to the first liquid cooling member (110) along a first direction (X), wherein the second liquid cooling member (120) is provided with a second liquid cooling flow channel (121) connected to the first liquid cooling member (120), and a gap is provided between the second liquid cooling member (120) and the first liquid cooling member (110) to form a first pressure relief channel (130);
wherein the first liquid cooling member (110) is provided with at least one first pressure relief hole (112) each penetrating through the first liquid cooling member (110) along the first direction (X), the first pressure relief hole (112) is communicated with the first pressure relief channel (130), and the first pressure relief hole (112) is configured to be communicated with an explosion-proof valve of at least part of battery cells in a battery module (300).

2. The pressure relief liquid cooling assembly (100) according to claim 1, **characterized in that** the second liquid cooling member (120) is provided with at least one second pressure relief hole (122) each penetrating through the second liquid cooling member (120) along the first direction (X), the second pressure relief hole (122) is communicated with the first pressure relief channel (130), and the second pressure relief hole (122) is configured to be communicated with the explosion-proof valve of at least part of the battery cells in the battery module (300).

3. The pressure relief liquid cooling assembly (100) according to claim 2, **characterized in that** the first liquid cooling member (110) is provided with a plurality of first pressure relief holes (112), the second liquid cooling member (120) is provided with a plurality of second pressure relief holes (122), and the plurality of first pressure relief holes (112) are misaligned with the plurality of second pressure relief holes (122) along the first direction (X).

4. The pressure relief liquid cooling assembly (100) according to claim 1, **characterized in that** the first liquid cooling member (110) comprises a first connecting plate (113) and a first liquid cooling plate (114) arranged opposite to each other along the first direction (X), the first liquid cooling plate (114) protrudes along a direction away from the first connecting plate (113) to form at least one first protruding part (1141), and the first protruding part (1141) and the first connecting plate (113) enclose to form the first liquid cooling flow channel (111); or
the second liquid cooling member (120) comprises a second connecting plate (123) and a second liquid cooling plate (124) arranged opposite to each other along the first direction (X), the second liquid cooling plate (124) protrudes along a direction away from the second connecting plate (123) to form at least one second protruding part (1241), the second protruding part (1241) and the second connecting plate (123) enclose to form the second liquid cooling flow channel (121), and the first pressure relief channel (130) is defined between the second liquid cooling plate (124) and the first liquid cooling plate (114).

5. The pressure relief liquid cooling assembly (100) according to claim 1, **characterized in that** the first liquid cooling member (110) comprises a first connecting plate (113) and a first liquid cooling plate (114) arranged opposite to each other along the first direction (X), the first liquid cooling plate (114) protrudes along a direction away from the first connecting plate (113) to form at least one first protruding part (1141), and the first protruding part (1141) and the first connecting plate (113) enclose to form the first liquid cooling flow channel (111); and
the second liquid cooling member (120) comprises a second connecting plate (123) and a second liquid cooling plate (124) arranged opposite to each other along the first direction (X), the second liquid cooling plate (124) protrudes along a direction away from the second connecting plate (123) to form at least one second protruding part (1241), the second protruding part (1241) and the second connecting plate (123) enclose to form the second liquid cooling flow channel (121), and the first pressure relief channel (130) is defined between the second liquid cooling plate (124) and the first liquid cooling plate (114).

6. The pressure relief liquid cooling assembly (100) according to claim 5, **characterized in that** the first protruding part (1141) is misaligned with the second protruding part (1241) along the first direction (X); or,
a spacing is provided between the first protruding part (1141) and the second protruding part (1241); or,
a side of the first protruding part (1141) facing the second liquid cooling plate (124) at least partially abuts against a side of the second protruding part (1241) facing the first liquid cooling plate (114).

7. The pressure relief liquid cooling assembly (100) according to claim 2, **characterized in that** the first liquid cooling flow channel (111) surrounds the first pressure relief hole (112); or,
the second liquid cooling flow channel (121) surrounds the second pressure relief hole (122); or,
the first liquid cooling flow channel (111) surrounds the first pressure relief hole (112), and the second liquid cooling flow channel (121) surrounds the second pressure relief hole (122).

8. The pressure relief liquid cooling assembly (100) according to any one of claims 1-7, **characterized in that** the pressure relief liquid cooling assembly (100) further comprises a sealing member (160) connected between the first liquid cooling member (110) and the second liquid cooling member (120), and along the first direction (X), at least one surface of opposite two sides of the sealing member (160) is provided with a groove (161) filled with a sealant inside.

9. The pressure relief liquid cooling assembly (100) according to any one of claims 1-8, **characterized in that** the pressure relief liquid cooling assembly (100) further comprises at least one second pressure relief member (12) detachably connected to the first pressure relief member (11), the second pressure relief member (12) comprises a support surface (1111) configured to support the battery module (300), the first pressure relief member (11) protrudes from the support surface (1111) to form an accommodation space (200) with the second pressure relief member (12), the accommodation space (200) is configured to mount the battery module (300), and the second pressure relief member (12) is provided with a second pressure relief channel (1201) communicated with the first pressure relief channel (130);
the first pressure relief hole (112) is provided on a side of the first pressure relief member (11) facing the accommodation space (200).

10. The pressure relief liquid cooling assembly (100) according to claim 9, **characterized in that** the pressure relief liquid cooling assembly (100) further comprises a plurality of first pressure relief members (11) arranged at intervals along the first direction (X) and respectively connected to the second pressure relief member (12), and the second pressure relief member (12) and any adjacent two one of the first pressure relief members (11) enclose to define the accommodation space (200).

11. The pressure relief liquid cooling assembly (100) according to claim 10, **characterized in that** the second pressure relief member (12) is provided with one second pressure relief channel (1201), and the first pressure relief channel (130) in each of the plurality of first pressure relief members (11) is communicated with the second pressure relief channel (1201); or
the second pressure relief member (12) is provided with a plurality of second pressure relief channels (1201) arranged at intervals along the first direction (X), each of the plurality of second pressure relief channels (1201) is provided corresponding to a respective one of a plurality of accommodation spaces (200), and the first pressure relief channel (130) in each of the first pressure relief members (11) is communicated with a corresponding one of the second pressure relief channels (1201) corresponding to at least one of the accommodation spaces (200) adjacent to the first pressure relief channel (130).

12. The pressure relief liquid cooling assembly (100) according to claim 10, **characterized in that** the pressure relief liquid cooling assembly (100) further comprises a plurality of second pressure relief members (12) each connected between the any adjacent two one of the first pressure relief members (11), the any adj acent two one of the first pressure relief members (11) and a corresponding one of the second pressure relief members (12) enclose to form the accommodation space (200), and the first pressure relief channel (130) in each of the first pressure relief members (11) is communicated with a corresponding one of the second pressure relief channels (1201) in at least one of the second pressure relief members (12) adjacent to the first pressure relief channel (130).

13. The pressure relief liquid cooling assembly (100) according to claim 12, **characterized in that** second pressure relief channels (1201) in the plurality of the second pressure relief members (12) are communicated with each other.

14. The pressure relief liquid cooling assembly (100) according to claim 12, **characterized in that** each of the first pressure relief members (11) located between adjacent two accommodation spaces (200) is provided with two first pressure relief channels (130) arranged side by side along the first direction (X), and the first pressure relief hole (112) and the second pressure relief hole (122) are respectively communicated with a corresponding one of the two first pressure relief channels (130).

15. The pressure relief liquid cooling assembly (100) according to claim 14, **characterized in that** the two first pressure relief channels (130) in each of the first pressure relief members (11) are communicated with each other; or
the two first pressure relief channels (130) in each of the first pressure relief members (11) are isolated from each other and respectively communicated with a corresponding one of the second pressure relief channels (1201) in the second pressure relief members (12), and the corresponding one of the second pressure relief channels (1201) corresponds to the accommodation space (200) adjacent to each of the two first pressure relief channels (130).
